**Europäisches Patentamt**

**European Patent Office**

**Office européen des brevets**

(11) Veröffentlichungsnummer: **0 178 284**
**B1**

(12) EUROPÄISCHE PATENTSCHRIFT

(45) Veröffentlichungstag der Patentschrift:
**26.10.88**

(21) Anmeldenummer: **85890192.9**

(22) Anmeldetag: **27.08.85**

(51) Int. Cl.⁴: **F 41 F 1/06**, F 16 J 15/08

(54) Geschosswaffe und Ring für eine Geschosswaffe.

(30) Priorität: **12.10.84 AT 3255/84**

(43) Veröffentlichungstag der Anmeldung:
**16.04.86 Patentblatt 86/16**

(45) Bekanntmachung des Hinweises auf die Patenterteilung:
**26.10.88 Patentblatt 88/43**

(84) Benannte Vertragsstaaten:
**BE CH DE FR GB IT LI LU NL SE**

(56) Entgegenhaltungen:
AT - A - 301 956
DE - A - 1 923 482
DE - B - 1 151 451
FR - A - 330 580
FR - A - 570 257
FR - A - 602 639
FR - A - 618 461
FR - A - 1 470 996
GB - A - 1 412 468
US - A - 3 572 729

(73) Patentinhaber: **VEREINIGTE EDELSTAHLWERKE AKTIENGESELLSCHAFT (VEW), Elisabethstrasse 12, A-1010 Wien (AT)**

(72) Erfinder: **Mocivnik, Josef, Dipl.-Ing., Frauengasse 25, A-8750 Judenburg (AT)**

## Beschreibung

Die Erfindung bezieht sich gemäss Oberbegriff des Anspruches 1 auf eine Geschosswaffe, insbesondere Granatwerfer, mit zumindest einem ein- oder mehrstückigen Waffenrohr, das an einem Ende ein vom Waffenrohr lösbar verbundenes Bodenstück mit Abfeuerungsvorrichtung aufweist, wobei an der Verbindungsstelle zwischen Bodenstück und Waffenrohr eine einen elastischen metallischen, der Abdichtung dienenden Ring aufnehmende ringförmige Nut vorgesehen ist. Eine derartige Einrichtung ist in der FR-A-602 639 beschrieben.

Geschosswaffen, insbesondere solche, bei welchen die Geschosse keine Kartusche aufweisen, sind hohen thermischen, abrasiven und korrosiven Beanspruchungen ausgesetzt. Es ist nun bekannt, dass bei Geschosswaffen, z.B. der Lauf aus mehreren Stücken besteht, die beispielsweise miteinander verschraubt sind, oder, dass das Bodenstück mit dem Rohr verschraubt oder lösbar verbunden ist. Wesentlich für die Anfangsgeschwindigkeit des Geschosses ist allerdings, dass keine bei der Explosion des Treibstoffes entstehenden Gase durch Undichtigkeitsstellen entweichen können. Weiters besteht die Gefahr, dass an derartigen Austrittsstellen der an sich heissen Gase eine weitere Zerstörung der Verbindung zwischen den einzelnen Waffenteilen eintritt, sodass die Undichtigkeit nun vergrössert wird, was in kürzester Zeit zur Unbrauchbarkeit der Waffe führt. Aus diesem Grund ist es erforderlich, bei der Gewindeverbindung des Bodenstücks eines Granatwerfers mit dem Werferrohr im Bodenstück eine Nut vorzusehen, in welcher ein O-Ring angeordnet ist. Dieser O-Ring ist Waffenrohr-näher als das hinter demselben angeordnete Gewinde. Eine derartige Abdichtung ist in verschiedenen Fällen ausreichend, jedoch ist durch die Verwendung von leistungsfähigeren Pulvern die druckmässige und auch temperaturmässige Beanspruchung grösser geworden, sodass derartige Dichtungen entweder nicht mehr den erwünschten Dichteffekt zeigen oder nach relativ kurzer Einsatzzeit ersetzt werden müssen, um eine Beschädigung des Gerätes zu vermeiden. Dieser Dichtring muss nicht O-förmig sein, sondern kann auch die Form eines Hohlprofiles aufweisen.

Aus FR-A- 602 639 und 570 257 sind Granatwerfer zu entnehmen, die ein Bodenstück aufweisen, das lösbar mit dem Werferrohr verbunden ist. Diese Teile sind durch eine Dichteinrichtung verschlossen, wobei im ersteren Fall dies mit einer Scheibe bekannter Art erzielt wird. Die weiters genannte Druckschrift zeigt hingegen ein Dichtelement zum Verschliessen eines Öldruckdämpfers für das Waffenrohr.

Weiters ist nach DE-A 1 151 451 ein Granatwerfer bekannt, der für eine Lademöglichkeit im Bereich des Rohrbodens ausgelegt ist. Hierbei wird eine Abdichtung zwischen zwei Rohrteilen geoffenbart, die jedoch nur aus einem Dichtteil besteht und andere Voraussetzungen zu erfüllen versucht.

Es ist jedoch nicht aufgezeigt, wie durch Verwendung von immer leistungsfähigeren Pulvern auch die druckmässige und damit temperaturmässige Beanspruchung beherrschbar ist. Besondere Ausbildungen, wie Kombination eines metallischen Ringes mit einem O-Ring od. dgl. sind nicht zu entnehmen.

Ausgehend von diesem Stand der Technik lag der Erfindung die Aufgabe zugrunde, eine ringförmige Dichtkombination zu schaffen, die die Druck- und Temperaturbeanspruchung eindämmt und durch die der verbleibende Gasdruck verschlossen wird. Erfindungsgemäss wird das Ziel dadurch erreicht, dass der Ring einen trapezförmigen Querschnitt mit zwei Schenkelbereichen aufweist, wobei die zwei Schenkelbereiche gegen entsprechende Flächen des Bodenstückes und des Waffenrohres anliegen, durch einen Ringspalt voneinander getrennt und über einen Ringteil miteinander verbunden sind, der Ringteil an seiner Aussenfläche eine Kegel- bzw. Zylinderfläche aufweist, und dass axial versetzt zur Nut eine weitere ringförmige Nut vorgesehen ist, die im Bodenstück und in der ein O-Ring, mit dem Waffenrohr dichtend, angeordnet ist. Dadurch wird erreicht, dass eine derartige Geschosswaffe eine wesentlich höhere Lebensdauer der Verbindung aufweist, da durch die ringförmige Dichtung im Gebrauchsfall die beiden Schenkel der Dichtung gegen die miteinander zu verbindenden Teile gedrückt werden, sodass eine Abdichtung vorliegt, die ihren Anpressdruck erhöht, je höher der Innendruck im Waffenrohr ist. Weiters besteht der Vorteil, dass eine derartige Waffe zerlegt werden kann, wobei die Dichtung ebenfalls wieder erneut zum Einsatz gebracht werden kann.

Gemäss einem weiteren Merkmal der Erfindung weisen die Schenkelbereiche des Ringes an ihren Aussenflächen Nuten auf, so ist eine zusätzliche Abdichtung, insbesondere durch Strömungsschikanen, ermöglicht.

Um eine gewisse Vorspannung des Ringes in der Geschosswaffe zu erreichen, schliessen die Schenkelbereiche im unmontierten Zustand einen grösseren Winkel miteinander ein, als im montierten Zustand.

Im folgenden wird die Erfindung anhand der Zeichnungen näher erläutert. Es zeigen:

Fig. 1 ein Bodenstück mit Waffenrohr im Schnitt

Fig. 2 einen Ausschnitt eines Ringes teilweise im Schnitt

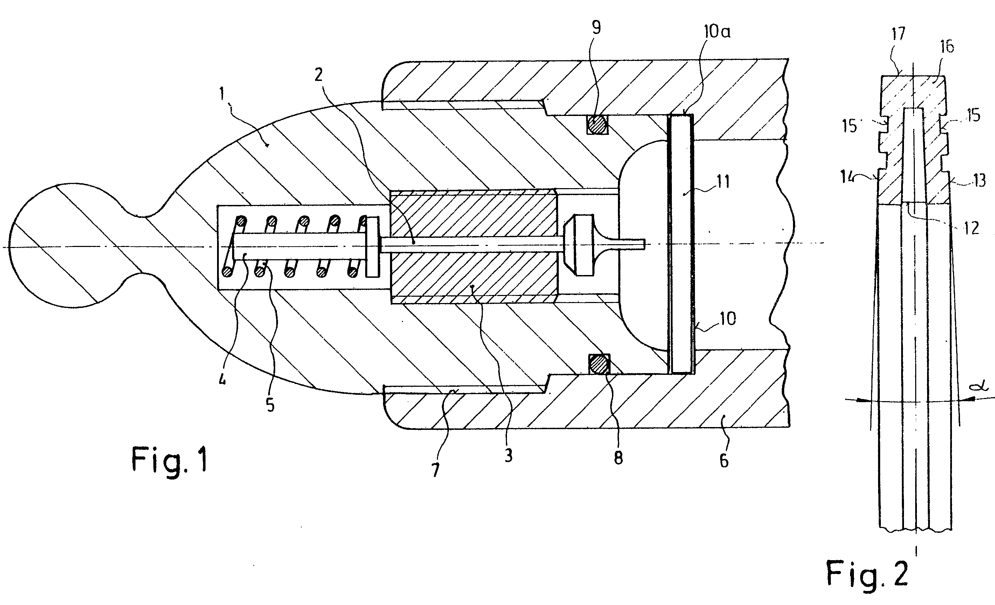

In dem in Fig. 1 dargestellten Bodenstück 1 ist ein Schlagbolzen 2 in einer Bohrung vorgesehen, welcher über einen Halteteil 3 im Bodenstück gehalten ist. Bei Betätigung des nicht dargestellten Abzuges schlägt das Schlagstück 4 durch die Feder 5 gegen den Schlagbolzen und bewirkt so die Detonation der im Geschossrohr 6 angeordneten Munition. Das Rohr 6 ist über ein Gewinde 7 mit dem Bodenstück 1 verbunden. Im Bodenstück ist eine ringförmige Nut 8 vorgesehen, in welcher ein O-Ring 9 angeordnet ist. An der Verbindungsstelle zwischen Rohr 6 und Bodenstück 1 wird eine ringförmige Nut 10 mit trapezförmigem, gegenständlich rechteckigem Querschnitt gebildet. In dieser Nut mit Nutboden 10a ist ein Ring 11 angeordnet, welcher mit seinen beiden Schenkelbereichen gegen das Bodenstück 1 bzw. gegen das Rohr 6 abdichtet.

Der in Fig. 2 teilweise im Schnitt dargestellte Ring 11 weist im wesentlichen trapezförmigen Querschnitt auf, wobei die in das Innere weisende Seite des trapezförmigen Querschnittes eine ringförmige Durchbrechung 12 besitzt. Die beiden Schenkelbereiche 13 und 14, die gegen das Bodenstück bzw. Waffenrohr abdichtend anliegen, können zusätzlich Nuten 15 aufweisen. Die beiden Schenkel sind über einen Ringteil 16 verbunden, der aussen eine Zylinderfläche 17 aufweist. Der in Fig. 2 dargestellte Ring ist in unbelastetem Zustand dargestellt. Wird dieser Ring belastet, so schliessen die beiden Schenkel nicht mehr einen Winkel α von ca. 2° miteinander ein, sondern sind zueinander parallel.

**Patentansprüche**

1. Geschosswaffe, insbesondere Granatwerfer mit zumindest einem ein- oder mehrstückigen Waffenrohr (6), das an einem Ende ein vom Waffenrohr lösbar verbundenes Bodenstück (1) mit Abfeuerungsvorrichtung (4, 5) aufweist, wobei an der Verbindungsstelle zwischen Bodenstück (1) und Waffenrohr (6) eine einen elastischen metallischen, der Abdichtung dienenden Ring (11) aufnehmende ringförmige Nut (10) vorgesehen ist, dadurch gekennzeichnet, dass der Ring (11) einen trapezförmigen Querschnitt mit zwei Schenkelbereichen (13, 14) aufweist, wobei die zwei Schenkelbereiche (13, 14) gegen entsprechende Flächen des Bodenstückes (1) und des Waffenrohres (6) anliegen, durch einen Ringspalt (12) voneinander getrennt und über einen Ringteil (16) miteinander verbunden sind, der Ringteil an seiner Aussenfläche eine Kegel- bzw. Zylinderfläche (17) aufweist, und dass axial versetzt zur Nut (10) eine weitere ringförmige Nut (8) vorgesehen ist, die im Bodenstück (1) und in der ein O-Ring (9), mit dem Waffenrohr (6) dichtend, angeordnet ist.

2. Geschosswaffe nach Anspruch 1, dadurch gekennzeichnet, dass die Schenkelbereiche (13, 14) des Ringes (11) an ihren Aussenflächen Nuten (15) aufweisen.

3. Geschosswaffe nach Anspruch 1 und 2, dadurch gekennzeichnet, dass die Schenkelbereiche (13, 14) im unmontierten Zustand einen grösseren Winkel (α) miteinander einschliessen, als im montierten Zustand.

**Revendications**

1. Arme tirant un projectile, mortier notamment, comportant au moins un tube (6) monobloc ou en plusieurs éléments, tube qui à une extrèmité présente un fond (1) relié au tube de manière amovible et comportant un dispositif de mise de feu (4,5), tandis qu'à l'emplacement de jonction du tube (6) et du fond (1) est prévue une gorge (10) pour loger une bague (11) métallique, élastique, assurant l'étanchéité, caractérisée en ce que la bague (11) présente une section trapézoïdale avec deux montants (13, 14), ces deux montants (13, 14) contigus aux surfaces correspondantes du fond (1) et du tube (6) étant séparés l'un de l'autre par un passage annulaire (12) et reliés ensemble au moyen d'une partie annulaire (16), celle-ci présentant sur sa face extérieure une surface (17) conique ou cylindrique et en ce que, décalée axialement par rapport à la gorge (10), est prévue une autre gorge (8) de forme annulaire dans le fond (1) et dans laquelle est placé un joint torique (9) assurant l'étanchéité avec le tube (6).

2. Arme tirant un projectile selon la revendication 1, caractérisée en ce que les montants (13, 14) de la bague 11 présentent sur leur surface externe des rainures (15).

3. Arme tirant un projectile selon les revendications 1 et 2, caractérisée en ce que les montants (13, 14) constituent ensemble à l'état non monté un angle (α) plus grand qu'à l'état monté.

**Claims**

1. A weapon, in particular a mortar with at least one single- or multiple-piece barrel (6) which is provided at one end with a base member (1) having a firing apparatus (4, 5) and connected so as to be detachable from the barrel, an annular groove (10), which receives a resilient metallic ring (11) used for sealing, being provided at the connexion point between the base member (1) and the barrel (6), characterized in that the ring (11) has a trapezoid cross-section with two arm areas (13, 14) the two arm areas (13, 14) bearing against corresponding surfaces of the base member (1) and the barrel (6), being separated from each other by an annular gap (12) and being connected to each other by an annular part (16), the annular part being provided on its outer surface by a conical or cylindrical surface (17), and a further annular groove (8), which is arranged in the base member (1) and in which is arranged an O-ring (9) acting as a seal with the barrel (6), is provided axially offset with respect to the groove (10).

2. A weapon according to Claim 1, characterized in that the arm areas (13, 14) of the ring (11) are provided with grooves (15) on their outer surfaces.

3. A weapon according to Claims 1 and 2, characterized in that in the unmounted state the arm areas (13, 14) form a greater angle (α) with each other than in the mounted state.

Fig. 1

Fig. 2